# EUROPEAN PATENT SPECIFICATION

(11) **EP 1 780 549 B1**
(45) Date of publication and mention of the grant of the patent: **14.04.2010**
(21) Application number: 06022719.6
(22) Date of filing: 31.10.2006
(51) Int. Cl.: G01P 3/44, F16J 15/32, F16C 19/52, F16C 33/78

(54) **Seal device with sensor and rolling bearing device using the same**
Dichtungsanordnung mit einem Sensor und Wälzlagervorrichtung mit einer solchen Dichtungsanordnung
Dispositif d'étanchéité avec capteur et dispositif de roulement l'utilisant

(30) Priority: 01.11.2005 JP 2005317969
(43) Date of publication of application: 02.05.2007
(73) Proprietor: JTEKT CORPORATION, Chuo-ku Osaka-shi Osaka 542-8502 (JP); UCHIYAMA MANUFACTURING CORP., Okayama-shi, Okayama 702-8004 (JP)
(72) Inventor: Koyagi, Katsura, Osaka-shi Osaka 542-8502 (JP); Kuwajima, Tooru, Osaka-shi Osaka 542-8502 (JP); Kageyama, Takeshi, Akaiwa-shi Okayama 701-2221 (JP)
(74) Representative: Weber, Joachim

(56) References cited:
- EP-A- 1 517 148
- WO-A-2005/040648
- JP-A- 5 026 233
- JP-A- 2006 291 977

## Description

### BACKGROUND OF THE INVENTION

The present invention relates to a seal device mounting a sensor device and a rolling bearing device using the seal device.

Since vehicles need various kinds of information for performing control, it has been proposed that a hub unit (a rolling bearing device) has a sensor device provided therein. The hub unit includes a wheel-side raceway member to which a wheel is attached, a body-side raceway member which is fixed to a body side, and two lines of rolling elements arranged between both of the wheel-side raceway member and the body-side raceway member.

As such a rolling bearing device, Patent Document 1 discloses a rolling bearing device including an outer ring, an inner ring, rolling elements arranged between both of the outer and inner rings, and seal disposed between the end portions of both of the outer and inner rings. On the end surface of the outer ring, a sensor supporting member having a sensor provided thereon is attached. Further, a ring-shaped magnet is fixed on the axial outer surface of a slinger fixed to the inner ring.

When such a rolling bearing device is applied to a hub unit of a vehicle, the axial dimension thereof needs to be reduced to less than a predetermined value. In the rolling bearing device of Patent Document 1, the ring-shaped magnet and the sensor supporting member are formed so as to project more than the bearing device in the axial direction, which makes it difficult to apply the rolling bearing device to a hub unit of a vehicle.

Accordingly, it is considered that a sensor is resin-molded to core metal composing a seal device so as to reduce an axial dimension. In this case, however, a gap can occur between resin and the core metal holding the resin as the resin contracts, the core metal and the resin can be separated from each other, or water can invade into the bearing from the boundary between the core metal and the resin. Therefore, prevention measures are needed.

Considering the above-described situation, the present applicants propose a seal device with a sensor in Patent Document 2, as shown in Fig. 3. The seal device with a sensor includes a cylindrical fitting portion 61, a flange portion 62, a cylindrical portion 63 for preventing water from invading, and an inner flange portion 64. The cylindrical fitting portion 61 includes a fixed seal member 8 that has core metal 21 fitted and fixed to a fixed member 3 and a sensor 11 resin-molded to the core metal 21; and a rotated seal member 9 that has a cylindrical portion 32, of which the axial inner portion is fitted and fixed to a rotating member 4, and a flange portion 33 which continues into the axial outer end portion of the cylindrical portion 32 so as to extend toward the fixed seal member 8. The core metal 21 of the fixed seal member 8 is fitted and fixed to the fixed member 3. The flange portion 62 continues into the axial inner end portion of the cylindrical fitting portion 61 so as to extend toward the cylindrical portion 32 of the rotated seal member 9. The cylindrical portion 63 for preventing water from invading continues into the flange portion 62 so as to extend outward in the axial direction thereof. The inner flange portion 64 continues into the cylindrical portion 63 for preventing water from invading so as to extend inward. Insert molding is performed so that the axial outer end portion of the cylindrical fitting portion 61 is positioned within resin, and a fitting portion 71 of elastic seal 65 having a plurality of lips 72, 73, and 74 is attached to at least one of the axial outer end portion of the cylindrical portion 63 for preventing water from invading and the axial outer end portion of the rotated seal member 9. The rotated seal member 9 has a pulser 60 including a support member 66 and a magnetized body 67. The support member 66 of the pulser 60 includes a small-diameter cylindrical portion 69 which is fitted and fixed to the outer circumference of the cylindrical portion 32 of the rotated seal member 9; a large-diameter cylindrical portion 68 having the magnetized body 67 provided on the outer circumference thereof; and a connecting portion 70 which connects the large-diameter cylindrical portion 68 and the small-diameter cylindrical portion 69.

The support member 66 of the pulser 60 comprises the large-diameter cylindrical portion 68, the small-diameter cylindrical portion 69, and the connecting portion 70. The small-diameter cylindrical portion 69 is pressed into the rotated seal member 9. When the pressing is performed, the right end position of the large-diameter cylindrical portion 68 and the right end position of the cylindrical portion 32 of the slinger 31 composing the rotated seal member 9 are on the same plane. Further, the right end position of the large-diameter cylindrical position 68 is slightly shifted more leftward than the right surface of the flange portion 62 of the fixed seal member 8, and the right end of the small-diameter cylindrical portion 69 is positioned more rightward than the large-diameter cylindrical portion 68.

As such, a required seal property is secured by combining the fixed seal member 8 and the rotated seal member 9. Further, as the output of the sensor 11 within the resin member 22 is drawn out by wiring units such as a connector portion 27, a connector pin 28, a connector 29, a lead line 30 and the like, it is possible to obtain such a seal device that has an excellent seal property and the sensor 11 mounted therein.

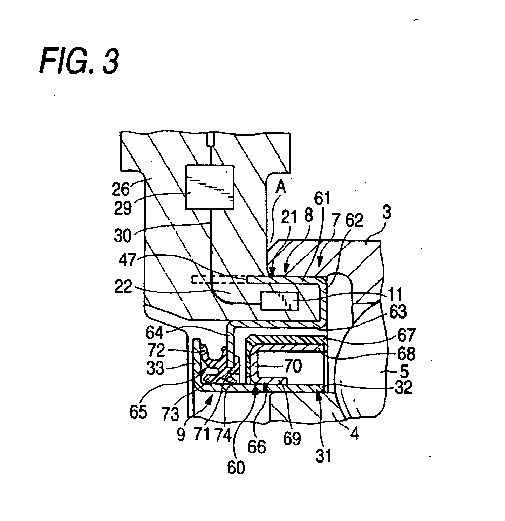

As for the seal property, a gap easily occurs in the interface between the core metal 21 and the resin member 22 due to the contraction of resin at the time of insert molding, a difference in expansion rate between metal and resin, and the repeated intrusion of muddy water, and water or the like can invade into the bearing from a position A of Fig. 3. Therefore, a bearing function can be degraded, and a lifetime can be reduced. However, the water invading from the position A of Fig. 3 is blocked by the fitting between the cylindrical portion 61 of the core metal 21 and the fixed raceway member 3 so as not to move rightward. The water invading leftward from the space between the outer periphery of the cylindrical portion 61 of the core metal 21 and the resin member 22 is sealed by the elastic seal 65 such that water is prevented from invading into the bearing.
Patent Document 1: JP-A-5-26233
Patent Document 2: JP-A-2006-291977, published on the 26.10.2006.

According to the seal device with a sensor disclosed in Patent Document 2, the axial dimension thereof is reduced, and the separation between the core metal and the resin member and the intrusion of water from the boundary between the core metal and the resin member can be prevented. As shown in Fig. 3, however, the axial inner end portion of the cylindrical portion 32 of the slinger 31 composing the rotated seal member 9 is fitted and fixed to the rotating member 4 and the small-diameter portion 69 of the support member 66 of the pulser is fitted and fixed to the middle of the cylindrical portion 32 of the slinger 31, which means that the fitting portions thereof are deviated from each other in the axial direction. Therefore, the rigidity of the fitting portion between the rotated seal member 31 and the rotating member 4 becomes relatively low. When the rigidity of the fitting portion is low, it is highly likely that water invades from the fitting portion. Therefore, it is desired to enhance the rigidity of the fitting portion without any demerit occurring.

Further the document WO 2005/040648A discloses a seal device with a sensor and a rolling bearing device using the seal device. The sensor consists of a vehicle body side raceway track member, a rotating side seal member and a fixed side seal member.

### SUMMARY OF THE INVENTION

An object of the present invention is to provide a seal device with a sensor and a rolling bearing device using the seal device. In the seal device and the rolling bearing device, the axial dimensions thereof can be reduced, and the separation between core metal and resin member and the intrusion of water from the boundary between the core metal and the resin member can be prevented. Further, the rigidity of the fitting portion between a rotated seal member and a rotating member can be enhanced.

[0012] In order to achieve the object, the present invention is characterized by having the following arrangement.
1. A seal device with a sensor comprising:
   a fixed member;
   a rotating member rotatable with respect to the fixed member;
   a core metal including a cylindrical fitting portion which is insert-molded to the fixed member so that an axial outer end portion of the cylindrical fitting portion is positioned within resin, a first flange portion that continues to an axial inner end portion of the cylindrical fitting portion, and a first cylindrical portion for preventing water from invading which continues to the first flange portion so as to extend outward in an axial direction;
   a sensor resin-molded to the core metal;
   a rotating seal member that includes a second cylindrical portion having an axial inner portion fitted and fixed to the rotating member, and a second flange portion which continues to an axial outer end portion of the second cylindrical portion so as to extend toward the fixed member;
   an elastic seal provided in at least one of the axial outer end portion of the first cylindrical portion and an axial outer end portion of the rotating seal member; and
   a pulser that includes a support member and a magnetized body and is provided in the rotating seal member,
   wherein the support member includes a small-diameter cylindrical portion that is fitted and fixed to the second cylindrical portion, a large-diameter cylindrical portion on which the magnetized body is provided, and a connecting portion that connects the large-diameter cylindricalportion to the small-diameter cylindrical portion, and
   wherein the support member is fitted and fixed to an axial inner end portion of the second cylindrical portion so that the connecting portion is set inward in the axial direction.

The fixing member may be set to an outer ring or inner ring of a rolling bearing, and the rotating member may be set to an inner ring or outer ring of a rolling bearing. However, this is not limited thereto.

The core metal may be formed of one rigid ring or more than two rigid rings. However, regardless of whether the core metal is formed of one rigid ring or more than two rigid rings, the core metal is set to have the large-diameter cylindrical portion and the small-diameter cylindrical portion such that the resin-molded sensor is positioned between both of the cylindrical portions.

The elastic seal is provided in the flange portion of the rotated seal member so as to come in sliding contact with the cylindrical portion for preventing water from invading. Alternately, the elastic seal is provided in the flange portion provided in the axial outer end portion of the cylindrical portion for preventing water from invading so as to come in sliding contact with the cylindrical portion of the rotated seal member and/or the flange portion.

The elastic seal may be provided in both of the outer ends of the rotated seal member and the cylindrical portion for preventing water from invading. Further, the elastic seal is provided not only between both of the outer ends of the rotated seal member and the cylindrical portion for preventing water from invading, but also between both of the inner ends thereof, if necessary.

The sensor is set to a magnetic sensor using an MR element or hole element. However, it is not limited thereto. Typically, a pulser applying a signal to a magnetic sensor is provided in the cylindrical portion of the rotated seal member so as to face the magnetic sensor.

The core metal and the resin member are insert-molded. At this time, the outer end portion of the cylindrical fitting portion is positioned within the resin. That is, the core metal is not closely attached only on the surface of the resin, but the end portion of the core metal is inserted into the resin.

The rotated seal member has the pulser including the support member and the magnetized body. The support member of the pulser comprises the small-diameter cylindrical portion fitted and fixed to the outer circumference of the cylindrical portion of the rotated seal member, the large-diameter cylindrical portion having the magnetized body provided on the outer circumference thereof, and the connecting portion connecting the large-diameter cylindrical portion and the small-diameter cylindrical portion.

The small-diameter cylindrical portion of the support member of the pulser is fitted and fixed to the axial inner portion of the cylindrical portion of the rotated seal member such that the connecting portion is set inward in the axial direction. Then, the fitting portion between the cylindrical portion of the rotated seal member and the rotating member is reinforced by the small-diameter cylindrical member of the support member of the pulser, which makes it possible to enhance the rigidity thereof.

Preferably, the small-diameter cylindrical portion of the support member of the pulser has a smaller axial length than the large-diameter cylindrical portion. The large-diameter cylindrical portion needs to have a certain axial length such that the magnetized body is provided therein. Further, in terms of rigidity, it is preferable that the small-diameter cylindrical portion is set to have the same axial length as the large-diameter cylindrical portion. In this case, however, it is difficult to perform press molding. When the small-diameter cylindrical portion of the support member of the pulser is fitted and fixed to the rotated seal member such that the connecting portion is set inward in the axial direction, the rigidity can be sufficiently enhanced even though the axial length of the small-diameter cylindrical portion is set to be smaller than the large-diameter cylindrical portion. As such, it is possible to enhance the rigidity without degrading the productivity.

The seal device with a sensor is preferably used in a rolling bearing device which includes a rolling bearing that comprises a fixed ring serving as a fixed member, a rotating ring serving as a rotating member, and rolling elements arranged between both of the rings; and a seal device which is integrally provided in the rolling bearing.

In this case, the fixed ring may be set to an outer ring, and the rotating ring may be set to an inner ring. Alternately, the fixed ring may be set to an inner ring, and the rotating ring may be set to an outer ring.

The fixed ring is set to a body-side raceway member having an attaching portion with a body and the rotating ring is set to a wheel-side raceway member having a ring attaching portion, so that the rolling bearing device is preferably used as a hub unit.

The seal device with a sensor according to the present invention includes the fixed seal member and the rotated seal member, and the fixed seal member has a sensor resin-molded to the core metal. Therefore, the sensor is mounted into the seal device. For example, when the sensor is attached to the rolling bearing, the sensor is easily embedded in the rolling bearing. Further, it is possible to reduce the axial dimension of the rolling bearing device with a sensor. Furthermore, since the outer end portion of the cylindrical fitting portion is insert-molded so as to be positioned within the resin, the core metal is not removed from the resin by a torque at the time of rotation. In addition, the elastic seal is provided in at least one of the axial outer end portion of the cylindrical portion for preventing water from invading and the axial outer end portion of the rotated seal member, the elastic seal coming in sliding contact with the other. Therefore, although water invades from the gap occurring between the core metal and the resin after the cylindrical fitting portion of the core metal is fitted and fixed to the fixed member, the water is delivered outward in the axial direction from the space between the resin and the cylindrical portion for preventing water from invading through between the cylindrical fitting portion and the resin and between (the outer surface in an axial direction of) the flange portion and the resin. Therefore, the water is prevented from invading into a device having the seal device with a sensor attached thereto. Further, the fitting portion between the cylindrical portion of the rotated seal member and the rotating member is reinforced by the small-diameter cylindrical portion of the support member of the pulser, which makes it possible to enhance the rigidity thereof. Therefore, it is possible to further enhance a seal property.

### BRIEF DESCRIPTION OF THE DRAWINGS

Fig. 1 is a vertical sectional view illustrating a sealing device with a sensor and a rolling bearing device according to an embodiment of the invention.
Fig. 2 is an enlarged vertical sectional view of Fig. 1.
Fig. 3 is an enlarged vertical sectional view illustrating a sealing device with a sensor and a rolling bearing device which is compared with the invention.

### DETAILED DESCRIPTION OF PREFERRED EMBODIMENTS

Hereinafter, a preferred embodiment of the present invention will be described with reference to accompanying drawings.

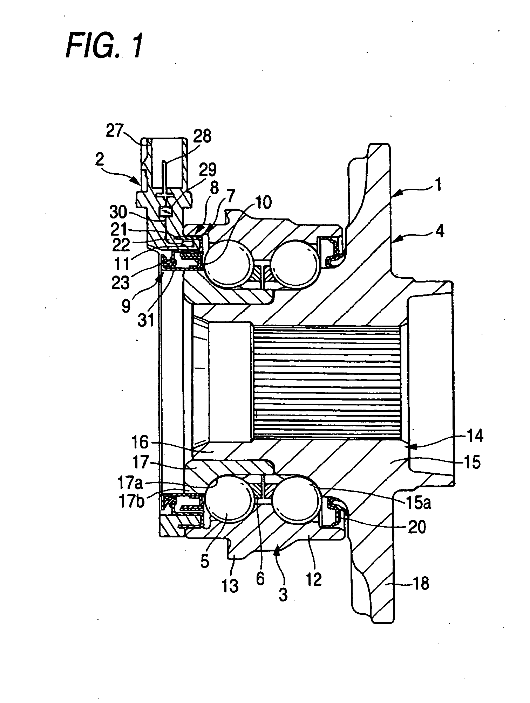

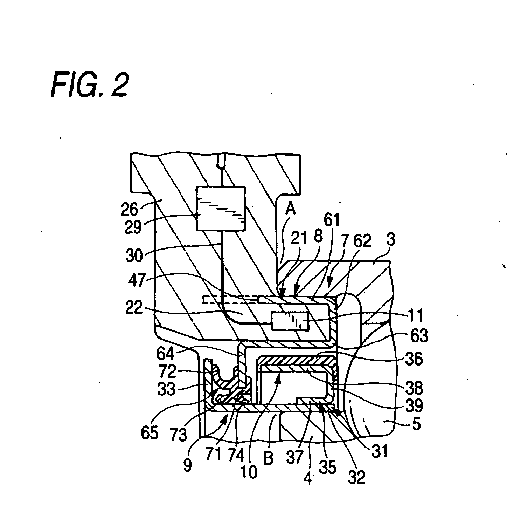

Figs. 1 and 2 are diagrams illustrating a seal device with a sensor and a rolling bearing device using the seal device according to an embodiment of the invention. In the following descriptions, the left and right sides are referred to as the left and right sides of Fig. 1, respectively. Further, the left side becomes the inside of a rolling stock, and the right side becomes the outside of the rolling stock.

The rolling bearing device includes a hub unit 1, a sensor device 2 provided in the hub unit 1, and a pulser 10 which is a portion to be detected.

The hub unit 1 includes a body-side raceway member 3 fixed to a body side, a wheel-side raceway member 4 on which a wheel is attached, a plurality of balls 5 serving as rolling elements which are arranged in two lines between both of the members 3 and 4, and a holder 6 which holds the respective lines of balls 5.

The body-side raceway member 3 having a function of an outer ring (fixed ring) of a bearing includes a cylindrical portion 12 having two lines of outer-ring raceways 12 formed on the inner periphery thereof and a flange portion 13 which is provided in the vicinity of the left end of the cylindrical portion 12 and is attached to a suspension (body) by a bolt.

The wheel-side raceway member 4 comprises a hollow shaft 14 including a large-diameter portion 15 having a first raceway groove 15a and a small-diameter portion 16 having a smaller diameter than the first raceway groove 15a; and an inner ring 17 which is fitted into the outer circumference of the small-diameter portion 16 of the hollow shaft 14 and of which the right surface comes in close contact with the left surface of the large-diameter portion 15 of the hollow shaft 14. On the inner periphery of the hollow shaft 14, a serration is provided. In the vicinity of the right end of the hollow shaft 14, a flange portion 18 is provided to which a plurality of bolts for attaching a wheel are fixed. The inner ring 17 having a raceway groove 17a formed thereon such that the raceway groove 17a is set in parallel to the raceway groove 15a of the hollow shaft 14. Further, the inner ring 17 has a shoulder portion 17b formed in the left portion thereof. Between the right end of the body-side raceway member 3 and the hollow shaft 4, a seal member 20 is formed of elastic seal and core metal.

Between the shoulder portion 17b of the inner ring 17 and the left end portion of the body-side raceway member 3, the seal device 7 according to the invention is provided.

The seal device 7 includes a fixed seal member 8 fixed to the body-side raceway member 3 and a rotated seal member 9 fixed to the wheel-side raceway member 4.

The stationary seal member 8 includes core metal 21, a resin member 22 integrated with the core metal 21 through insert molding, a sensor 11 resin-molded to the core metal 21, and elastic seal 23 bonded to the core metal 21.

The resin member 22 is formed in a ring shape. The outer diameter of the ring-shaped portion is set to be substantially equal to that of the left end portion of the fixed raceway member 3. Further, on the ring-shaped portion, a projecting portion 26 is provided so as to project leftward and outward in the diameter direction. In the upper end portion of the projecting portion 26, a connector portion 27 for attaching a harness connecting the sensor 11 and a processing unit provided in the body side is integrally formed. The connector portion 27 having a signal connector pin 28 provided therein such that the sensor 11 and the connector pin 28 are connected through a connector 29 and a lead line 30 (or only a lead line).

The rotated seal member 9 includes a slinger 31 fitted and fixed to the shoulder portion 17b of the inner ring 17 of the wheel-side raceway member 4 and the pulser 10 fixed to the slinger 31.

Wiring units, such as the sensor 11, the connector portion 27 retrieving an output of the sensor 11 to the outside, the connector pin 28, the connector 29, the lead line 30 and the like, and a processing unit (not shown) constitutes a sensor device 2. The sensor 11 comprises a magnetic sensor, and the sensing surface thereof is set to face the outer periphery of a pulser 10 from the outward direction in the diameter direction.

Referring to Fig. 2, the seal device 7 will be described in more detail.

The core metal 21 of the fixed seal member 8 is formed of one rigid ring. The core metal 21 includes a cylindrical fitting portion 61 which is fitted and fixed to the left end portion of the body-side raceway member 3, an outer flange portion 62 continuing into the axial inner end portion (right end portion) of the cylindrical portion 61 so as to extend inward (a direction directed to the rotated seal member 9), a cylindrical portion 63 for preventing water from entering which continues into the outer cylindrical flange portion 62 so as to extend outward (leftward) in the axial direction, and an inner flange portion 64 which continues into the cylindrical portion 63 for preventing water from entering so as to extend in the inward direction. On the inner peripheral edge of the inner flange portion 64, elastic seal 65 is bonded. The left portion of the cylindrical fitting portion 61 is formed to project more leftward than the left end of the body-side raceway member 3 and is inserted into the resin member 22. The cylindrical portion 63 for preventing water from entering is abutted on the inner periphery of the resin member 22, and the left end thereof is positioned more leftward than the resin member 22. The core metal 21 is made of nonmagnetic metal, such as SUS304, such that a magnetic line is easily put into the detecting surface of the magnetic sensor 11.

The slinger 31 comprises a cylindrical portion 32, of which the axial inner end portion (right end portion) is fitted and fixed to the shoulder portion 17b of the inner ring 17 of the wheel-side raceway member 4, and an outward flange portion 33 which continues into the axial outer end portion (left end portion) of the cylindrical portion 31 in the axis direction so as to extend toward the fixed seal member 8. Between the outward flange portion 33 and the inner flange portion 64 of the core metal 21 of the fixed seal member 8, a space is formed in which the elastic seal 65 can be housed.

The pulser 10 of the rotated seal member 9 has N poles and S poles alternately disposed so as to generate a magnetic force so that the sensor 11 combined therewith outputs a rotation signal. Accordingly, the pulser 10 comprises a ring-shaped support member 35 and a magnetized body 36 bonded to the support member. The support member 35 is made of magnetic metal such as SUS430. The magnetized body 36 is formed by magnetizing magnetic powder, with rubber being set to binder.

The support member 35 of the pulser 10 comprises a small-diameter cylindrical portion 37 which is fitted and fixed to the outer circumference of the cylindrical portion 32 of the slinger 31 of the rotated seal member 9, a large-diameter cylindrical portion 38 having the magnetized body 36 provided on the outer circumference thereof, and a connecting portion 39 which connects the large-diameter cylindrical portion 38 and the small-diameter cylindrical portion 37. The axial length of the small-diameter cylindrical portion 37 is smaller than that of the large-diameter cylindrical portion 38. The magnetized body 36 is provided on the outer circumference of the large-diameter cylindrical portion 38 so as to face the sensor 11- The gap between the magnetized body 36 and the cylindrical portion 63 for preventing water from entering is set to as a small value as possible in the range where both of the magnetized body 36 and the cylindrical portion 63 do not come in contact with each other.

In the support member 35 of the pulser 10, the small-diameter cylindrical portion 37 is fitted and fixed to the axial inner portion of the cylindrical portion 32 of the slinger 31 such that the connecting portion 39 is set inward in the axis direction. In this embodiment, the connecting portion 39 of the support member 35 of the pulser 10 and the axial inner end surface of the cylindrical portion 32 of the slinger 31 are on the same plane. Accordingly, the fitting portion between the cylindrical portion 32 of the slinger 31 and the wheel-side raceway member 4'is reinforced by fitting the small-diameter cylindrical portion 37 of the support member 35. of the pulser 10 into the inner end portion of the cylindrical portion 32 of the slinger 31, thereby improving the rigidity thereof.

The sensor 11 is positioned within the resin member 22 filled between the cylindrical portion 61 which is a large-diameter cylindrical portion and the cylindrical portion 63 which is a small-diameter cylindrical portion.

In the outer end portion of the cylindrical portion 61 of the core metal 21 of the fixed seal member 8, a notched portion 47 for leading wiring lines 30 is provided. The wiring lines 30 connect the sensor 11 and a signal processing unit.

The elastic seal 65 includes a U-shaped fitting portion 71 which is fitted in the inner peripheral edge of the inner flange portion 64 of the core metal 21; an axial lip 72 which extends leftward from the left surface of the fitting portion 71 so as to come in sliding contact with the flange portion 33 of the slinger 31; a first radial lip 73 which extends leftward and inward in the diameter direction from the bottom surface of the fitting portion 71 so as to come in sliding contact with the cylindrical portion 32 of the slinger 31; and a second radial lip 74 which extends inward in the diameter direction from the bottom surface of the fitting portion 71 so as to come in sliding contact with the cylindrical portion 32 of the slinger 31.

The core metal 21 of the fixed seal member 8 and the resin member 22 are integrated by insert molding.

In the interface between the core metal 21 and the resin member 22, a gap easily occurs due to the contraction of resin at the time of insert molding, a difference in expansion rate between metal and resin, and the repeated intrusion of muddy water. Further, water can invade into the bearing from a position A shown in Fig. 2. Accordingly, a bearing function can be degraded, and a lifetime can be reduced. According to the seal device 7 of this embodiment, the intrusion of water from the position A of Fig. 2 is prevented by the fitting between the cylindrical portion 61 of the core metal 21 and the fixed raceway member 3 such that the water cannot move rightward but invades leftward from the space between the outer periphery of the cylindrical portion 61 of the core metal 21 and the resin member 22. As described above, the gap can occur in the boundary between the resin member 22 and the core metal 21. Therefore, invading water can enter into the left end portion of the cylindrical portion 63 through the left end and the inner periphery of the cylindrical portion fitting 61 and the left end of the flange portion 62. However, since the elastic seal 65 is present in the position, water is prevented from invading into the bearing. As such, it is possible to reliably prevent water from invading even though an O-ring is not used. Further, since the cylindrical portion 61 of the core metal 21 of the fixed seal member 8 is fitted and fixed to the body-side raceway member 3, the core metal 21 is prevented from sliding on the fixed seal member 8 due to the torque accompanied by the sliding of the elastic seal 65. Further, since insert molding is performed in a state where the left portion of the cylindrical portion 61 of the core metal 21 of the fixed seal member 8 is inserted into the resin member 22, the sliding between the core metal 21 and the resin member 22 is also prevented.

As for the fitted position of the pulser 10 with respect to the slinger 31, the connecting portion 39 of the support member 35 is set inward in the axial direction in a state where the axial inner portion of the cylindrical portion 32 of the slinger 31 composing the rotated seal member 9 is fitted and fixed to the wheel-side raceway member 4. Therefore, the fitting portion of the small-diameter cylindrical portion 37 of the support member 35 is superimposed on the fitting portion between the slinger 31 and the wheel-side raceway member 4. As for the fitted position of the pulser 60 with respect to the slinger 31 in the example shown in Fig. 3, the connecting portion 39 of the support member 35 is set outward in the axial direction, while the fitting between the slinger 31 and the wheel-side raceway member 4 is performed the same as Fig. 2. Therefore, the fitting portion of the small-diameter cylindrical portion 37 of the support member 35 is deviated from the fitting portion between the slinger 31 and the wheel-side raceway member 4. Accordingly, in the seal device of Fig. 3, the rigidity of the fitting portion between the cylindrical portion 32 of the slinger 31 and the wheel-side raceway member 4 is relatively low. Further, in the seal device of Fig. 2, the rigidity of the fitting portion between the cylindrical portion 32 of the slinger 31 and the wheel-side raceway member 4 is relatively high, as the fitting portion is reinforced by the small-diameter cylindrical portion 37 of the support member 35 of the pulser 10. Therefore, in the seal device of Fig. 2, the construction of the pulser 10 is not changed from that of Fig. 3, but only a direction at the time of pressing is changed. Then, a high seal property is maintained so as to prevent water from invading from a position B of Fig. 3. Further, a seal property is further enhanced.

The hub unit 1 of this embodiment is shown as a driving ring having a serration provided in the hollow shaft 14 such that the bearing portion of a constant-velocity joint can be inserted. However, the hub unit 1 can be set as a driven ring, as the hollow shaft is replaced with the rotation shaft of a driven ring. Although the description has been made with the hub unit 1 being exemplified, the seal device 7 can be applied to various rolling bearing devices or various rotary equipments which relatively performs rotation, in addition to the hub unit 1.

## Claims

1. A seal device (7) with a sensor comprising:
a fixed member (8);
a rotating member (9) rotatable with respect to the fixed member (8);
a core metal (21) including a cylindrical fitting portion (61) which is insert-molded to the fixed member (8) so that an axial outer end portion of the cylindrical fitting portion (61) is positioned within resin, a first flange portion (62) that continues to an axial inner end portion of the cylindrical fitting portion (61), and a first cylindrical portion (63) for preventing water from invading which continues to the first flange portion (62) so as to extend outward in an axial direction;
a sensor (11) resin-molded to the core metal (21);
a rotating seal member (9) that includes a second cylindrical portion (32) having an axial inner portion fitted and fixed to the rotating member (9), and a second flange portion (33) which continues to an axial outer end portion of the second cylindrical portion so as to extend toward the fixed member (8),
an elastic seal (65) provided in at least one of the axial outer end portion of the first cylindrical portion (63) and an axial outer end portion of the rotating seal member (9); and
a pulser (10) that includes a support member (35) and a magnetized body (36) and is provided in the rotating seal member (9),
wherein the support member includes a small-diameter cylindrical portion (37) that is fitted and fixed to the second cylindrical portion (32), a large-diameter cylindrical portion (38) on which the magnetized body (36) is provided, and a connecting portion (39) that connects the large-diameter cylindrical portion (38) to the small-diameter cylindrical portion (37), and
wherein the support member is fitted and fixed to an axial inner end portion of the second cylindrical portion (32) so that the connecting portion (39) is set inward in the axial .direction.

2. The seal device according to claim 1, wherein the small-diameter cylindrical portion (37) has a smaller axial length than that of the large-diameter cylindrical portion (38).

3. A rolling bearing device comprising:
a rolling bearing that includes a fixed ring (3) serving as a fixed member, a rotating ring (4) serving as a rotating member, and rolling elements arranged between both of the fixed and rotating rings (3,4); and
the seal device (7) with a sensor according to claim 1, the seal device (7) being integrally provided in the rolling bearing.

4. The rolling bearing device according to claim 3, wherein the fixed ring (3) is set to a body-side raceway member having an attachment portion with a body, and the rotating ring (4) is set to a wheel-side raceway member having a wheel attachment portion, so that the rolling bearing device is used as a hub unit (1).

## Patentansprüche

1. Dichtungsvorrichtung (7) mit einem Sensor, umfassend:
ein feststehendes Element (8);
ein drehendes Element (9), das in Bezug auf das feststehende Element (8) drehbar ist;
einen Metallkern (21), umfassend einen zylindrischen Einpassbereich (61), der durch Umspritzen am feststehenden Element (8) geformt ist, so dass ein axialer Außenendbereich des zylindrischen Einpassbereichs (61) innerhalb eines Harzes angeordnet ist, einen ersten Flanschbereich (62), der weiter zu einem axialen Innenendbereich des zylindrischen Einpassbereichs (61) verläuft, und
einen ersten zylindrischen Bereich (63), um ein Eintreten von Wasser zu vermeiden, der weiter zum ersten Flanschbereich (62) verläuft, um sich so nach außen in einer axialen Richtung zu erstrecken;
einen Sensor (11), der mittels Harz am Metallkern (21) eingeformt ist;
ein drehendes Dichtungselement (9), das einen zweiten zylindrischen Bereich (32) mit einem axialen Innenbereich, der am drehenden Element (9) eingepasst und befestigt ist, und einen zweiten Flanschbereich (33), der weiter zu einem axialen Außenendbereich des zweiten zylindrischen Bereichs verläuft, um sich so in Richtung zum feststehenden Element (8) zu erstrecken, umfasst;
eine elastische Dichtung (65), die in dem axialen Außenendbereich des ersten zylindrischen Bereichs (63) und/oder einem axialen Außenendbereich des drehenden Dichtungselements (9) vorgesehen ist; und
einen Impulsgeber (10), der ein Lagerelement (35) und einen magnetisierten Körper (36) umfasst und in dem drehenden Dichtungselement (9) vorgesehen ist,
wobei das Lagerelement einen zylindrischen Bereich (37) mit kleinem Durchmesser, der am zweiten zylindrischen Bereich (32) eingepasst und befestigt ist, einen zylindrischen Bereich (38) mit großem Durchmesser, auf dem der magnetisierte Körper (36) vorgesehen ist, und einen Verbindungsbereich (39), der den zylindrischen Bereich (38) mit großem Durchmesser mit dem zylindrischen Bereich (37) mit kleinem Durchmesser verbindet, umfasst, und
wobei das Lagerelement an einem axialen Innenendbereich des zweiten zylindrischen Bereichs (32) eingepasst und befestigt ist, so dass der Verbindungsbereich (39) in der axialen Richtung nach innen festgelegt ist.

2. Dichtungsvorrichtung nach Anspruch 1, wobei der zylindrische Bereich (37) mit kleinem Durchmesser eine geringere axiale Länge aufweist als der zylindrische Bereich (38) mit großem Durchmesser.

3. Wälzlagervorrichtung, umfassend:
ein Wälzlager, das einen feststehenden Ring (3), der als ein feststehendes Element dient, einen drehenden Ring (4), der als ein drehendes Element dient, und Wälzelemente, die zwischen dem feststehenden und dem drehenden Ring (3, 4) angeordnet sind, umfasst; und
eine Dichtungsvorrichtung (7) mit einem Sensor nach Anspruch 1, wobei die Dichtungsvorrichtung (7) einstückig in dem Wälzlager vorgesehen ist.

4. Wälzlagervorrichtung nach Anspruch 3, wobei der feststehende Ring (3) an einem körperseitigen Laufringelement mit einem Befestigungsbereich an einem Körper festgelegt ist und der drehende Ring (4) an einem radseitigen Laufringelement mit einem Radbefestigungsbereich festgelegt ist, so dass die Wälzlagervorrichtung als eine Nabeneinheit (1) verwendet wird.

## Revendications

1. Dispositif d'étanchéité (7) avec un capteur (11) comprenant :
un élément fixe (8) ;
un élément tournant (9) pouvant tourner par rapport à l'élément fixe (8) ;
un noyau métallique (21) comportant une partie d'assemblage cylindrique (61) qui est moulé en insert sur l'élément fixe (8) de telle sorte qu'une partie d'extrémité externe axiale de la partie d'assemblage cylindrique (61) est positionnée à l'intérieur de la résine, une première partie en collerette (62) qui s'étend vers une partie d'extrémité interne axiale de la partie d'assemblage cylindrique (61), et une première partie cylindrique (63), destinée à empêcher l'eau de s'introduire, qui s'étend vers la première partie en collerette (62) de manière à s'étendre vers l'extérieur dans une direction axiale ;
un capteur (11) moulé dans la résine sur le noyau métallique (21) ;
un élément d'étanchéité tournant (9) qui comporte une seconde partie cylindrique (32) comportant une partie interne axiale assemblée et fixée sur l'élément tournant (9), et une seconde partie en collerette (33) qui s'étend vers une partie d'extrémité externe axiale de la seconde partie cylindrique de manière à s'étendre vers l'élément fixe (8) ;
un joint élastique (65) formé sur au moins l'une de la partie d'extrémité externe axiale de la première partie cylindrique (63) et d'une partie d'extrémité externe axiale de l'élément d'étanchéité tournant (9) ; et
un générateur d'impulsions (10) qui comporte un élément support (35) et un corps magnétisé (36) et est agencé sur l'élément d'étanchéité tournant (9),
dans lequel l'élément support comporte une partie cylindrique de faible diamètre (37) qui est assemblée et fixée sur la seconde partie cylindrique (32), une partie cylindrique de grand diamètre (38) sur laquelle le corps magnétisé (36) est agencé, et une partie de liaison (39) qui relie la partie cylindrique de grand diamètre (38) à la partie cylindrique de faible diamètre (37), et
dans lequel l'élément support est assemblé et fixé sur une partie d'extrémité interne axiale de la seconde partie cylindrique (32) de telle sorte que la partie de liaison (39) est placée vers l'intérieur dans la direction axiale.

2. Dispositif d'étanchéité selon la revendication 1, dans lequel la partie cylindrique de faible diamètre (37) présente une longueur axiale inférieure à celle de la partie cylindrique de grand diamètre (38).

3. Dispositif formant palier à roulement comprenant :
un palier à roulement qui comporte une bague fixe (3) servant d'élément fixe, une bague tournante (4) servant d'élément tournant, et des éléments roulants agencés entre chacune des deux bagues fixe et tournante (3, 4) ; et
le dispositif d'étanchéité (7) avec un capteur selon la revendication 1, le dispositif d'étanchéité (7) étant agencé intégralement dans le palier à roulement.

4. Dispositif formant palier à roulement selon la revendication 3,
dans lequel la bague fixe (3) est placée sur un élément formant piste du côté châssis comportant une partie de fixation avec un châssis, et la bague tournante (4) est placée sur un élément formant piste du côté roue comportant une partie de fixation de roue, de telle sorte que le dispositif formant palier à roulement est utilisé comme une unité formant moyeu (1).
